Europäisches Patentamt

European Patent Office

Office européen des brevets

(11) Publication number: **0 125 282 B1**

# EUROPEAN PATENT SPECIFICATION

(45) Date of publication of patent specification: **26.08.92** (51) Int. Cl.⁵: **G02B 6/26**

(21) Application number: **83903730.6**

(22) Date of filing: **24.10.83**

(86) International application number:
**PCT/US83/01672**

(87) International publication number:
**WO 84/01835 (10.05.84 84/12)**

(54) **OPTICAL FIBER TAP.**

(30) Priority: **27.10.82 US 437054**
**23.05.83 US 496797**

(43) Date of publication of application:
**21.11.84 Bulletin 84/47**

(45) Publication of the grant of the patent:
**26.08.92 Bulletin 92/35**

(84) Designated Contracting States:
**AT BE CH DE FR LI LU NL SE**

(56) References cited:

**APPLIED PHYSICS LETTERS, vol. 29, no. 8, October 15, 1976, American Institute of Physics, US; L. JEUNHOMME et al.: "Directional coupler for multimode optical fibers", pages 485-487.**

(73) Proprietor: **RAYCHEM CORPORATION (a Delaware corporation)**
**300 Constitution Drive**
**Menlo Park, California 94025(US)**

(72) Inventor: **BEALS, Penny, L.**
**931 Palm Avenue**
**Redwood City, CA 94036(US)**
Inventor: **SIMON, Phyllis, L.**
**1115 Crestview Drive No.2**
**San Carlos, CA 94070(US)**
Inventor: **CAMPBELL, Bruce, D.**
**221 Vista Verde Way**
**Portola Valley, CA 94025(US)**
Inventor: **NAIDOFF, Robert, J.**
**250 Old Spanish Trail**
**Portola Valley, CA 94025(US)**
Inventor: **TYLOR, Richard, E.**
**3296 Trafalgar Road**
**Fremont, CA 94536(US)**

(74) Representative: **Benson, John Everett et al**
**Raychem Limited Intellectual Property Law Department Faraday Road Dorcan**
**Swindon, Wiltshire SN3 5HH(GB)**

EP 0 125 282 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# Description

This invention relates to an apparatus for and method of tapping an optical fibre, and especially to tapping used to provide a node in a ring topology data processing local area network.

In the past few years, as large scale integration of semiconductor circuitry has made microprocessors and microcomputers available, there has arisen an increased interest in methods of efficient interconnection into what are usually referred to as local area networks. The aim of the lcoal area network is the connection of data processing nodes (terminals, computers, etc.) in such a manner that they may communicate with each other, sharing resources and exchanging information. Such networks are now commercially available from such manufacturers as Xerox Corporation (Ethernet™) and Wang Laboratories (Wangnet™).

Three general classes of physical link topologies are employed for these networks: bus, star, and ring. The bus topology provides a bus which operates as a bidirectional transmission facility to which all the nodes are attached. Signals from one node enter the bus and propagate down it in both directions to its ends, where they are terminated. Such a topology provides a passive attachment mechanism: nodes may be added to or deleted from the network without disruption. In the star topology, all signals from the nodes pass through a central point (the "hub"). The hub may be active, and act as a controller: a typical example of this is a telephone swithboard or PBX; or may be passive, and simply provide a junction for transmission facilities to and from each node.

In the ring topology, however, the nodes are connected by unidirectional transmission facilities to form a structure with a single closed path. Signals placed on the ring pass from node to node and are regenerated as they pass through each node. The attachment node has been referred to as active attachment, enabling all attached nodes to maintain synchronization. A disadvantage of the ring topology is, however, that the addition or deletion of nodes disrupts the network.

Approximately contemporaneously with the increase in networks has been interest in optical fibers as a data communications medium. Optical fibers offer substantial advantages over electrical conductors, particularly in bandwidth (enabling higher data transmission rates) and in immunity to electrical noise (requiring less shielding). Two principal disadvantages are fragility and difficulty of connection. Adequate techniques are now available for jacketing and strengthening optical fiber cables so that they can be used virtually as easily as conventional communications cable, and certainly as easily as high-bandwidth coaxial cable, and techniques for connection continue to improve.

It is when an optical fiber is proposed to be used as the communications medium in a ring network that a real disadvantage of optical fibers appears. When a node is removed from a ring network, the break in the ring occupied by the detector-data processor-transmitter of that node must be filled to establish connection between the nodes on either side of the removed node. For electrical circuitry, this is comparatively easy: a switch can be used to break the line and connect it to the node. The deterioration of signal quality when the node is switched out of the ring is minimal. However, when an optical fibre is used, connections cannot be as easily made and broken.

What is desired is an optical fibre tap which, when it is not actuated, causes essentially no loss in the optical fibre and which, when actuated, switches as much as desired of the optical signal into/out of the node.

We have discovered that it is possible to produce a tap for an optical fibre, the tap having an open position in which is does not operate on the fibre and a closed position in which it does operate on the fibre, which enables the non-destructive tapping of an optical fibre. Such a tap may be used, for example, in a node in a local area network, particularly a ring topology local area network. The tap operates, when in its closed posiion, by bending the fibre to permit the detection of an optical signal passing down the fibre and the injection of an optical signal into the fibre.

Optical couplers for injecting or extracting light from an optical fibre are known. For example, US 4253727 describes a coupler comprising an index adaptor having a grating of ridges and furrows to curve the fibre along a zig zag path. This causes light extracted from the fibre to form parallel beams, whose direction is modified by a cone shaped optical surface of the index adaptor, and focussed onto a detector. The coupler therefore operates by first injecting light into an optical fibre and then extracting light therefrom.

The invention is illustrated in the accompanying drawing, in which Figure 1 shows the tap in its closed position, Figure 2 shows it in its open position; and Figure 3 shows a second embodiment of the tap.

A first aspect of this invention provides an apparatus for tapping an optical fibre carrying a first optical signal, comprising:

means for withdrawing part of said first optical signal from the optical fibre at a first position, said means for withdrawing comprising a first bending means through which the fibre passes and in which the fibre is bent sufficiently to cause at least a portion of an optical signal passing down the fibre to escape from the fibre;

detecting means for detecting the portion of the first optical signal which has escaped from the fibre when it is maintained in a bent configuration by the first bending means;

means for attenuating the signal in the fibre at a second position that is downstream of the first position and upstream of a third position, said means for attenuating comprising means for inducing bends in the fibre and being operable by bender actuating means;

means for injecting another optical signal into the optical fibre at the third position which is downstream of the first and second positions said means for injecting comprising a second bending means through which the fibre passes and in which the fibre is bent sufficiently to permit the injection of said another optical signal into the fibre the withdrawing means, the attenuating means and the injecting means being so positioned that the first optical signal is so attenuated as to prevent confusion between the first optical signal and the injected optical signal.

A second aspect of this invention provides a method of tapping, by means of apparatus according to the invention, an optical fibre carrying an optical signal , comprising the steps of:

(a) withdrawing part of the optical signal from the optical fibre at a first position;

(b) attenuating the signal in the fibre at a second position that is downstream of the first position and upstream of a third position; and

(c) injecting another optical signal into the optical fibre at the third position which is downstream of the first and second positions;

(d) detecting the withdrawn signal part;

and wherein the detected signal escapes from the fibre and/or the injected signal is injected into the fibre by bending the fibre and using a coupling means.

According to the invention, the apparatus comprises an attenuation means located between the detecting means and injecting means to attenuate any signal passing through the fibre. This attenuation means may be physically linked to the first bending means and detecting means so that the signal which is removed from the optical fibre by the attenuation means is collected by the detecting means.

Particular advantages of the invention include that (a) it is non-destructive, i.e. for the fibre remains a continuous length and need not be broken and terminated to enable use of the invention, (b) even when the fibre is placed within the apparatus, passing through the bending means, the apparatus does not operate on the fibre when in its open position and there is substantially no attenuation in this position induced by the apparatus, (c) the apparatus is readily movable between its open and closed positions, enabling tapping of the fibre only when desired, and (d) because the optical signals may be passed through the buffer of the fibre into an out of the fibre, the fibre need not be completely stripped and is thus less subject to breakage or environmental damage.

Optical fibres for telecommunications and data processing applications are generally of the glass-on-glass type, comprising a glass core (through which the optical signals travel), a glass cladding of a lower refractive index surrounding the core to enable it to act as a waveguide, and a relatively soft polymeric buffer, generally of a refractive index greater than the cladding, which surrounds the cladding. A fiber with the buffer removed, i.e. a fiber comprising only core and cladding, is much weaker than the same fiber with a buffer. This weakness manifests itself both as a much greater tendency to break when bent (a buffered fiber can stand much tighter bends and repeated bends better than an unbuffered one) and a tendency to stress-cracking (because the hydrolytic attack on the unbuffered fiber is particularly prone to occur at bends where micro-cracks may be formed). Both of these factors limit the usefulness of any technique which operates on unbuffered fibers, especially when it is desired to be able to repeatedly connect and disconnect an optical coupler or tap. In the case of plastic-clad silica (PCS) fibers, which are contemplated especially for military use, and all-plastic fibers, the buffer and cladding may be the same. The buffer may be surrounded by a jacket. It is possible, by the use of the tap of this invention, to withdraw signals from or inject signals into, an optical fiber through the buffer.

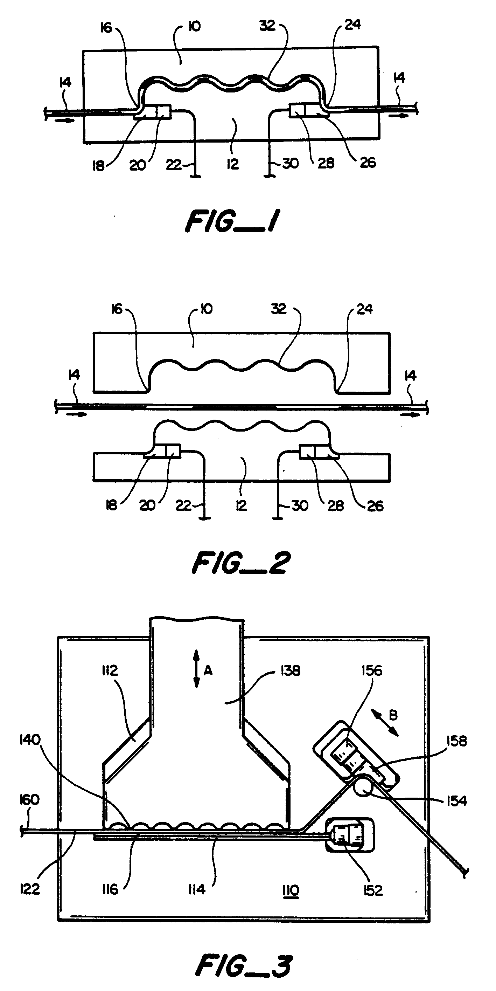

Figure 1 shows the tap of this invention in its closed, or operating position. The tap comprises two matching blocks 10 and 12, designed to come together about an optical fiber 14, along which an optical signal may travel in the direction of the arrow. The receiver section of the tap comprises a first bending means 16, a first coupling means 18, and a detecting means 20, which may be connected by a signal line 22 (optical or electrical) to a data processor, etc. (not shown). The transmitter section comprises a second bending means 24, a second coupling means 26, and an injecting means 28, which may be connected by a signal line 30 to a signal source, e.g. the data processor. Located between the first and second bending means is a signal attenuation means 32, shown here as a means for inducing a series of bends in the fiber.

When the tap is in the closed position, so that the fiber 14 is held between blocks 10 and 12, at least a portion of a signal passing down the fiber in the direction of the arrow is caused to escape from the fiber by the bend maintained in the fiber by the first bending means 16. That signal is coupled into the detecting means 20 by coupling means 18, and is then available to an external device. The signal remaining in the fiber 14 beyond the first bending means may then be attenuated by signal attenuation means 32, to prevent confusion between the original signal and a signal to be injected into the fiber by the transmitter. That signal, originating in some device external to the tap, passes into the injecting means 28, and is then injected, via second coupling means 26, into fiber 14 where it is held bent by the second bending means 24. The signal then passes down fiber 14 in the direction indicated by the arrow.

Though the tap has been shown as being bilaterally symmetric in construction, such is not a requisite of the invention, and the receiver and transmitter may be independently designed for optimum performance.

Figure 2 shows the tap in its open position. Because the fiber 14 is not bent by the bending means or signal attenuation means, an optical signal may pass down it in the direction of the arrow substantially without attenuation, as if the tap were not present.

The bend radius of the fibers when maintained in its bent position by the first or second bending means will preferably be 1.5 to 15mm, particularly 2 to 10mm, especially 3 to 8mm.

The angle between the signal entering or leaving the fiber at the bending means and the tangent to the fiber core at the point of impact of the signal will preferably be less than the acceptance angle of the fiber, for example less than 20°, particularly not more than 10°, especially substantially 0°. The point of impact of the signal is preferably at the point at which the bend maintained in the fiber by the bending means straightens out, so that the signal is preferably directed along an essentially straight piece of fiber. This is particularly important for the transmitter.

The coupling members should (a) conform to the surface of the fiber, (b) lie in the path of the optical signal, and (c) increase the proportion of the signal coupled into or out of the optical fiber. Each will preferably comprise a block of a resiliently deformable polymeric material, such as a polysiloxane, which is transparent to the optical signal and has a refractive index which is preferably approximately equal to the refractive index of the buffer of the fiber, for example within ±0.3, e.g. ±0.2, especially ±0.1, of the buffer refractive index. The material of the block preferably has a Young's modulus less than that of the buffer, for example less than $10^7$ N/m$^2$.

The signal attenuation means may comprise means for inducing a series of bends in the fiber, as it is well-known that bending a fiber leads to signal loss therefrom. It is desirable, however, that the attenuation means should not damage the fiber, so that a signal may pass down the fiber with essentially no attenuation when the tap is in its open position.

The tap should be easily movable between its open and closed positions by an actuating means. This motion may, for example, be performed by a solenoid. The solenoid may be biased such that the tap is normally open, and is closed when power is applied to the solenoid. In this way, if power to the tap is lost, the optical fiber is released and a signal may pass down the fiber unattenuated.

A further advantage of the tap of this invention is that it may be installed in an optical fiber loop which forms the basis of a ring network (for example, built into a socket box in a wall in a building within which the optical fiber loop is located) and only put into use when it is desired to add a node to the ring at that point. Because the tap may be connected to the data processor of the node by separate signal lines (e.g. electrical signal lines), additional slack in the ring optical fiber is not required, and prewiring of a building for a network is rendered facile.

Figure 3 shows an alternative embodiment for the tap of this invention in which the first bending means forms a part of the signal attenuation means.

The body 110 of the tap has a slot 112 in which slides (in the direction of the arrows A) a key 138 having microbend-inducing protrusions 140. The key 138 is preferably of metal or rigid polymer and, if polymeric, is preferably of a lower refractive index than the buffer. It will generally be movable by a solenoid or similar actuating means (not shown) so that when it is not urged against the fiber to cause optical coupling the fiber will be unbent and will show no attenuation. The optimum shape and spacing of the protrusions 140 may be determined either by experiment and/or by reference to e.g. U.S. Patent No. 4,253,727 (Jeunhomme et al.). The spacing is preferably 0.5 to 5mm, especially 1 to 2.5mm.

A rigid backing means 114 supported by the body 110 of the tap, supports a polymeric rod 116. The backing means may be metal or, preferably, polymeric. The backing means and rod may each be flat or the backing means and rod may be so shaped that they form a waveguide in which rod 116 acts as the "core" of the waveguide and backing means 114 as the "cladding". Of course, a part of the "cladding" 114 is then cut away to form a slot into which the fiber 122 may be laid to allow it to contact rod 116.

It will be realized that it is desirable that backing means 114 be either highly reflective or relatively transparent and of lower refractive index than rod 116 to improve its properties as an optical cladding, and be rigid enough that it should not deform when the fiber is pressed against rod 116 (or light will be lost). A suitable material for backing means 114 is e.g. polyvinylidene fluoride. Rod 116 should be transparent, since it is, in effect the "core" of a waveguide, and should be resiliently deformable and softer than the buffer of the fiber desired to be used. A preferable hardness range is about 30 to 90 Shore A. Below about 30 an anomalous coupling effect occurs - the coupling (as measured by light emerging from the end of the rod) increases with increasing force to a certain point and then decreases. It is believed that this is due to loss of light from the rod as it is deformed. Above about 90 coupling increases with increasing force, but the fiber tends to break before very high coupling is achieved as the fiber is simply being compressed between two relatively rigid objects.

For optimum detection, it is expected that the rod refractive index should be greater than that of the buffer at the fiber. Suitable materials for the rod include, for example, silicones of the type already used conventionally in fiber optics. An example of a suitable material is Shinetsu KE106, which is a two-part RTV silicone. Many other materials are, of course, also suitable within the constraints described above.

The end of rod 116 which carries the coupled light, i.e. the end furthest away from the source of the light, abuts against a detector 152, which may be connected to data processing means, etc. by a signal line (not shown).

The buffered fibre 122, after passing through the coupler as described above, then passes through a transmitter section comprising a macrobend inducing means shown as rod 154 and a signal injecting means shown as a light source 156 and coupling means 158 analogous to 28 and 26 of Figures 1 and 2. Although it is believed that the single macrobend of the transmitter section causes no substantial attenuation of the light which may be passing down the fibre 122, it is possible to have the transmitter section open and close (such as by movement of source 156 and coupling means 158 in the direction of the arrows B) to minimize the extent of the bending when the transmitter section is not being used.

A signal passing down optical fibre 122 from end 160 may be not only coupled into rod 116, but may also be so attenuated by the coupler that essentially no signal is being carried by the fibre by the time it reaches the transmitter section. This may be desirable when the tap is used as a node in a ring network, in which each mode receives and regenerates the signal when it is actively connected into the circuit.

Thus this second embodiment parallels the first embodiment in function, and differs in the fact that while in the first embodiment the detecting means and attenuation means are separate, in the second embodiment the attenuation means and detecting means are physically combined. In this way, the first bending means corresponds to the first key protrusion (although each protrusion causes a coupling of light out of the fiber); and the attenuation means to the key and rod assembly as a whole. The key and rod assembly shown in Figure 3 is, of course, suitable as an attenuation means for the tap of Figure 1, and the rod then may be opaque if desired.

By the use of either embodiment, or indeed any other embodiment within the scope of this invention as limited by the claims, it is possible to provide a tap for a buffered optical fiber capable of acting as a node for a local area network, especially a ring topology local area network, that will require minimum prewiring and provide portability for the nodes.

**Claims**

1. An apparatus for tapping an optical fibre (14) carrying a first optical signal, comprising:

   means (16,18,20) for withdrawing part of said first optical signal from the optical fibre (14) at a first position, said means for withdrawing comprising a first bending means (16) through which the fibre passes and in which the fibre is bent sufficiently to cause at least a portion of said first optical signal passing down the fibre to escape from the fibre;

   detecting means for detecting the portion of the first optical signal which has escaped from the fibre when it is maintained in a bent configuration by the first bending means;

   means (32) for attenuating the signal in the fibre (14) at a second position that is downstream of the first position and upstream of a third position, said means for attenuating comprising means for inducing bends in the fibre and being operable by bender actuating means; and

   means (24,26,28) for injecting another optical signal into the optical fibre at the third position which is downstream of the first and second positions, said means for injecting comprising a second bending means (24) through which the fibre passes and in which the fibre is bent sufficiently to permit the injection of said another optical signal into the fibre;

   the withdrawing means, the attenuating means and the injecting means being so positioned that the first optical signal is so attenuated as to prevent confusion between the first optical signal and the injected optical signal.

2. An apparatus according to claim 1, wherein the means for withdrawing (16,18,20) and/or the means for injecting (24,26,28) include a coupling means (18,26).

3. An apparatus according to claim 2, wherein the means (16,24) for bending the fibre has an open position whereat the fibre (14) is not bent and a closed position whereat fibre (14) is bent, and further comprising bender actuating means for moving the bending means between its open and closed positions.

4. An apparatus according to any one of claims 1 to 3, where the means for withdrawing and/or the detecting means are such that the withdrawn signal escapes from fibre (14) and/or the injected signal is injected into the fibre (14) through a buffer of the fibre.

5. An apparatus according to any one of claims 1 to 4, wherein the means (32) for attenuating has an open position in which the signal passing through the fibre is not attenuated and a closed position in which the signal passing through the fibre is attenuated, and further comprising an attenuator activating means for moving the attenuating means between its open and closed positions.

6. A method of tapping, by means of apparatus according to any preceding claim, an optical fibre (14) carrying an optical signal, comprising the steps of:
    (a) withdrawing part of the optical signal from the optical fibre (14) at a first position;
    (b) attenuating the signal in the fibre (14) at a second position that is downstream of the first position and upstream of a third position;
    (c) injecting another optical signal into the optical fibre (14) at the third position which is downstream of the first and second positions; and
    (d) detecting the withdrawn signal part;
and wherein the detected signal escapes from the fibre (14) and/or the injected signal is injected into the fibre (14) by bending the fibre and using a coupling means (20,28).

7. A method according to claim 6, wherein the fibre (14) is bent about a radius of between 1.5 and 15 mm.

8. A method according to claim 6, wherein the detected signal escapes from the fibre (14) and/or the injected signal is injected into the fibre (14) through a buffer of the fibre.

9. A method according to claim 6, wherein the fibre (14) includes a buffer which has an index of refraction which is greater than that of a cladding of the fibre (14).

10. A method according to claim 6, wherein the fibre (14) forms part of a ring or bus network.

11. A method according to claim 6, wherein the fibre (14) comprises either a glass core surrounded by a glass cladding or a plastic-clad fibre.

12. A method according to claim 6, wherein the fibre (14) is continuous and unbroken through the first, second and third positions.

**Patentansprüche**

1. Vorrichtung zum Verzweigen eines Lichtwellenleiters (14), der ein erstes optisches Signal führt, wobei die Vorrichtung aufweist:

    Einrichtungen (16, 18, 20), um dem Lichtwellenleiter (14) an einer ersten Stelle einen Teil des ersten optischen Signals zu entnehmen, wobei die Einrichtungen zum Entnehmen eine erste Biegeeinrichtung (16) aufweisen, durch die der Lichtwellenleiter verläuft und in der der Lichtwellenleiter ausreichend gebogen wird, um wenigstens einen Teil des ersten optischen Signals, das den Lichtwellenleiter durchläuft, zum Austritt aus dem Lichtwellenleiter zu veranlassen;

    eine Detektiereinrichtung, um den aus dem Lichtwellenleiter ausgetretenen Teil des ersten optischen Signals zu detektieren, wenn der Lichtwellenleiter von der ersten Biegeeinrichtung in einer gebogenen Konfiguration gehalten wird;

    eine Einrichtung (32), um das Signal in dem Lichtwellenleiter (14) an einer zweiten Stelle, die an der Abstromseite der ersten Stelle und der Aufstromseite einer dritten Stelle liegt, zu dämpfen, wobei die Einrichtung zum Dämpfen Mittel aufweist, um in dem Lichtwellenleiter Biegungen zu induzieren, und von einer Biegeeinrichtungs-Betätigungseinrichtung betätigbar ist; und

    Einrichtungen (24, 26, 28), um an der dritten Stelle, die an der Abstromseite der ersten und der zweiten Stelle liegt, ein weiteres optisches Signal in den Lichtwellenleiter einzukoppeln, wobei die Einrichtungen zum Einkoppeln eine zweite Biegeeinrichtung (24) aufweisen, durch die der Lichtwellenleiter verläuft und in der der Lichtwellenleiter ausreichend gebogen wird, um das Einkoppeln des weiteren optischen Signals in den Lichtwellenleiter zuzulassen;

wobei die Entnahmeeinrichtungen, die Dämpfungseinrichtung und die Einkoppeleinrichtungen so positioniert sind, daß das erste optische Signal so gedämpft wird, daß eine Verwechslung zwischen dem ersten optischen Signal und dem eingekoppelten optischen Signal verhindert wird.

2. Vorrichtung nach Anspruch 1, wobei die Einrichtungen (16, 18, 20) zum Entnehmen und/oder die Einrichtungen (24, 26, 28) zum Einkoppeln eine Kopplungseinrichtung (18, 26) aufweisen.

3. Vorrichtung nach Anspruch 2, wobei die Einrichtung (16, 24) zum Biegen des Lichtwellenleiters eine Offenstellung, in der der Lichtwellenleiter (14) nicht gebogen ist, und eine Schließstellung hat, in der der Lichtwellenleiter (14) gebogen ist, und ferner umfassend eine Biegeeinrichtungs-Betätigungseinrichtung, um die Biegeeinrichtung zwischen ihrer Offen- und ihrer Schließstellung zu bewegen.

4. Vorrichtung nach einem der Ansprüche 1 bis 3, wobei die Einrichtungen zum Entnehmen und/oder die Detektiereinrichtung derart sind, daß das entnommene Signal aus dem Lichtwellenleiter (14) austritt und/oder das Einkopplungssignal durch eine Faserhülle in den Lichtwellenleiter (14) eingekoppelt wird.

5. Vorrichtung nach einem der Ansprüche 1 bis 4, wobei die Einrichtung (32) zum Dämpfen eine Offenstellung, in der das den Lichtwellenleiter durchlaufende Signal nicht gedämpft wird, und eine Schließstellung hat, in der das den Lichtwellenleiter durchlaufende Signal gedämpft wird, und ferner umfassend eine Dämpfungseinrichtungs-Betätigungseinrichtung, um die Dämpfungseinrichtung zwischen ihrer Offen- und ihrer Schließstellung zu bewegen.

6. Verfahren zum Verzweigen eines ein optisches Signal führenden Lichtwellenleiters (14) mittels einer Vorrichtung nach einem der vorhergehenden Ansprüche, wobei das Verfahren folgende Schritte aufweist:

(a) Entnehmen eines Teils des optischen Signals aus dem Lichtwellenleiter (14) an einer ersten Stelle;

(b) Dämpfen des Signals in dem Lichtwellenleiter (14) an einer zweiten Stelle, die an der Abstromseite der ersten Stelle und der Aufstromseite einer dritten Stelle liegt;

(c) Einkoppeln eines weiteren optischen Signals in den Lichtwellenleiter (14) an der dritten Stelle, die an der Abstromseite der ersten und der zweiten Stelle liegt; und

(d) Detektieren des entnommenen Signalteils;

und wobei das detektierte Signal aus dem Lichtwellenleiter (14) austritt und/oder das Einkopplungssignal durch Biegen des Lichtwellenleiters und Verwendung einer Kopplungseinrichtung (20, 28) in den Lichtwellenleiter (14) eingekoppelt wird.

7. Verfahren nach Anspruch 6, wobei der Lichtwellenleiter (14) um einen Radius zwischen 1,5 mm und 15 mm gebogen wird.

8. Verfahren nach Anspruch 6, wobei das detektierte Signal aus dem Lichtwellenleiter (14) austritt und/oder das Einkopplungssignal durch eine Faserhülle in den Lichtwellenleiter (14) eingekoppelt wird.

9. Verfahren nach Anspruch 6, wobei der Lichtwellenleiter (14) eine Faserhülle mit einer Brechzahl aufweist, die größer als die eines Mantels des Lichtwellenleiters (14) ist.

10. Verfahren nach Anspruch 6, wobei der Lichtwellenleiter (14) Teil eines Ring- oder Busnetzwerks ist.

11. Verfahren nach Anspruch 6, wobei der Lichtwellenleiter (14) entweder einen Glaskern, der von einem Glasmantel umgeben ist, oder einen kunststoffummantelten Lichtwellenleiter umfaßt.

12. Verfahren nach Anspruch 6, wobei der Lichtwellenleiter (14) durch die erste, die zweite und die dritte Stelle kontinuierlich und ungebrochen ist.

**Revendications**

1. Appareil pour réaliser une prise de dérivation sur une fibre optique (14) portant un premier signal optique, comportant :

des moyens (16, 18, 20) destinés à prélever une partie dudit premier signal optique de

7

la fibre optique (14) en une première position, lesdits moyens de prélèvement comprenant un premier moyen à courber (16) à travers lequel la fibre passe et dans lequel la fibre est suffisamment courbée pour amener au moins une partie dudit premier signal optique parcourant la fibre à s'échapper de la fibre ;

des moyens de détection destinés à détecter la partie du premier signal optique qui s'est échappée de la fibre pendant qu'elle est maintenue dans une configuration courbée par le premier moyen à courber ;

des moyens (32) destinés à affaiblir le signal dans la fibre (14) en une deuxième position qui est en aval de la première position et en amont d'une troisième position, lesdits moyens d'affaiblissement comprenant un moyen destiné à induire des courbures dans la fibre et pouvant être mis en oeuvre par des moyens d'actionnement de dispositif à courber ; et

des moyens (24, 26, 28) destinés à injecter un autre signal optique dans la fibre optique dans la troisième position qui est en aval des première et deuxième positions, lesdits moyens d'injection comprenant un second moyen à courber (24) à travers lequel la fibre passe et dans lequel la fibre est suffisamment courbée pour permettre l'injection dudit autre signal optique dans la fibre ;

les moyens de prélèvement, les moyens d'affaiblissement et les moyens d'injection étant positionnés de manière que le premier signal optique soit assez affaibli pour éviter toute confusion entre le premier signal optique et le signal optique injecté.

2. Appareil selon la revendication 1, dans lequel les moyens de prélèvement (16, 18, 20) et/ou les moyens d'injection (24, 26, 28) comprennent des moyens de couplage (18, 26).

3. Appareil selon la revendication 2, dans lequel les moyens (16, 24) à courber la fibre ont une position ouverte dans laquelle la fibre (14) n'est pas courbée et une position fermée dans laquelle la fibre 14 est courbée, et comportant en outre des moyens d'actionnement de dispositif à courber destinés à déplacer les moyens à courber entre leurs positions ouverte et fermée.

4. Appareil selon l'une quelconque des revendications 1 à 3, dans lequel les moyens de prélèvement et/ou les moyens de détection sont tels que le signal prélevé s'échappe de la fibre (14) et/ou que le signal injecté est injecté dans la fibre (14) à travers une enveloppe de la fibre.

5. Appareil selon l'une quelconque des revendications 1 à 4, dans lequel les moyens (32) d'affaiblissement ont une position ouverte dans laquelle le signal parcourant la fibre n'est pas affaibli et une position fermée dans laquelle le signal parcourant la fibre est affaibli, et comportant en outre un moyen d'activation des moyens d'affaiblissement destiné à déplacer les moyens d'affaiblissement entre leur position ouverte et fermée.

6. Procédé pour réaliser une dérivation, au moyen d'un appareil selon l'une quelconque des revendications précédentes, sur une fibre optique (14) portant un signal optique, comprenant les étapes qui consistent :

(a) à prélever une partie du signal optique de la fibre optique (14) en une première position ;

(b) à affaiblir le signal dans la fibre (14) en une deuxième position qui est en aval de la première position et en amont d'une troisième position ;

(c) à injecter un autre signal optique dans la fibre optique (14) dans la troisième position qui est en aval des première et deuxième positions ; et

(d) à détecter la partie de signal prélevée ;

et dans lequel le signal détecté s'échappe de la fibre (14) et/ou le signal injecté est injecté dans la libre en courbant la fibre et en utilisant des moyens de couplage (20, 28).

7. Procédé selon la revendication 6, dans lequel la fibre (14) est courbée à un rayon compris entre 1,5 et 15 mm.

8. Procédé selon la revendication 6, dans lequel le signal détecté s'échappe de la fibre (14) et/ou le signal injecté est injecté dans la fibre (14) à travers une enveloppe de la fibre.

9. Procédé selon la revendication 6, dans lequel la fibre (14) comprend une enveloppe qui présente un indice de réfraction supérieur à celui d'une gaine de la fibre (14).

10. Procédé selon la revendication 6, dans lequel la fibre (14) fait partie d'un réseau en anneau ou à bus.

11. Procédé selon la revendication 6, dans lequel la fibre (14) comprend soit un coeur de verre entouré d'une gaine de verre, soit une fibre à gaine en matière plastique.

**12.** Procédé selon la revendication 6, dans lequel la fibre (14) est continue et ininterrompue à travers les première, deuxième et troisième positions.

**FIG__1**

**FIG_2**

**FIG_3**